# EUROPEAN PATENT APPLICATION

(11) **EP 1 619 811 A1**
(43) Date of publication of application: **25.01.2006**
(21) Application number: 05012138.3
(22) Date of filing: 06.06.2005
(51) Int. Cl.: H04B 10/155

(54) **Optical transmission apparatus using duobinary modulation**

(30) Priority: 20.07.2004 KR 2004056305
(71) Applicant: SAMSUNG ELECTRONICS CO., LTD., Suwon-si, Gyeonggi-do (KR)
(72) Inventor: Lee, Han-Lim c/o Samsung Electronics Co., Ltd., Suwon-si Gyeonggi-do (KR); Kim, Hoon c/o Samsung Electronics Co., Ltd., Suwon-si Gyeonggi-do (KR); Lee, Jae-Hoon c/o Samsung Electronics Co., Ltd., Suwon-si Gyeonggi-do (KR); Oh, Yun-Je c/o Samsung Electronics Co., Ltd., Suwon-si Gyeonggi-do (KR); Hwang, Seong-Taek c/o Samsung Electronics Co., Ltd, Suwon-si Gyeonggi-do (KR)
(74) Representative: Grünecker, Kinkeldey, Stockmair & Schwanhäusser Anwaltssozietät

(57) **Abstract**

An optical transmission apparatus using duo-binary modulation adapted to an optical communication system using dense wavelength division multiplexing (DWDM) is disclosed. The duo-binary optical transmission apparatus includes an electro-absorption modulated laser (EML) for performing a light intensity modulation operation based on an electrical data signal and producing a modulated optical signal, the EML having a light source for outputting carriers and a modulator for performing the light intensity modulation operation, a precoder for inputting an inverted signal of the electrical data signal and encoding it to an encoded signal, and a modulator for performing a phase modulation of the optical signal modulated by the EML and outputting a duo-binary optical signal, according to the encoded signal.

## Description

The present invention relates to an optical transmission apparatus, and more particularly to an optical transmission apparatus using duo-binary modulation adapted to an optical communication system using dense wavelength division multiplexing (DWDM). The present invention further relates to a duo-binary optical transmission method.

Duo-binary modulation converts a binary signal into a ternary signal or multilevel signal, in which the phase of the binary signal is inverted at a digit '0'. Since a duo-binary signal requires a relatively narrow line width as compared to an OOK (On-Off Keying) signal with respect to optical spectrum, it beneficially reduces channel intervals in optical communication systems adopting dense wavelength division multiplexing (DWDM). Also, since the duo-binary signal has a relatively large tolerance with respect to dispersion of an optical fiber, it can be transmitted 2 to 3 times farther than a transmission distance of the OOK signal without dispersion compensation. Also, no carrier tone component is included in an optical spectrum so that the duo-binary signal is rarely affected by stimulated Brillouin scattering (SBS). Also, even though the duo-binary signal is processed by an RZ (Retum to Zero) modulation method, no DC frequency component is induded therein. This means that it can be easily transformed by the VSB (Vestigial Sideband) modulation method at a receiving terminal such that the tolerance with respect to dispersion of an optical fiber can be increased.

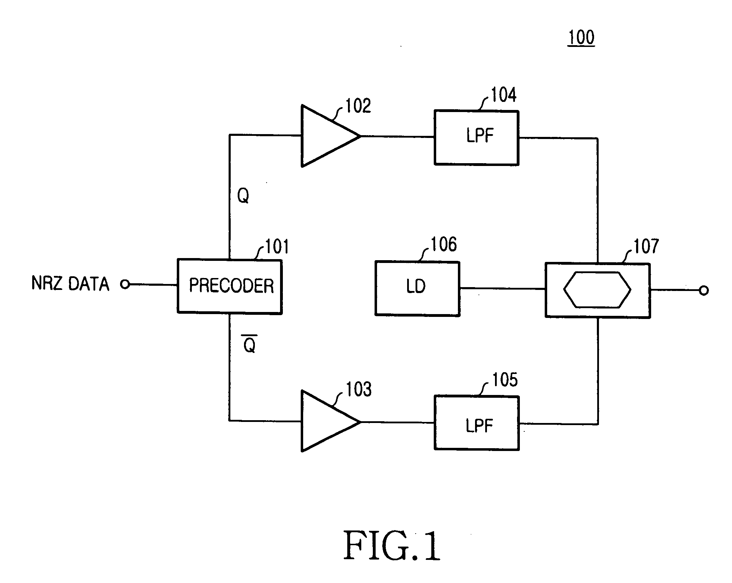

Fig. 1 is a block diagram illustrating a conventional optical transmission apparatus 100 using duo-binary modulation utilizing an electrical low bandpass filter.

As shown in Fig. 1, the conventional optical transmission apparatus 100 includes a precoder 101, two driving amplifiers 102 and 103, two low bandpass filters 104 and 105, a laser source 106, and a Mach-Zehnder (M-Z) interferometer type optical intensity modulator 107.

In operation, input binary data is encoded in the precoder 101. Generally, a precoder may include a one bit delay and exclusive OR (XOR) gate as a logic element. The encoded binary data (for example, Q data and /Q data corresponding to inverted data of Q) are input to the two low bandpass filters 104 and 105 via the driving amplifiers 102 and 103, respectively. Ideally, the low bandpass filters 104 and 105 should be cosine square filters, but may also be a Bessel-Thomson filter. If a bandwidth of the low bandpass filters 102 and 103 is a line width of 3dB corresponding to 1/4 of a transmission speed for a binary data signal (for example, a filter of 2.5GHz for data of 10Gb/s), binary signals passing through the low bandpass filters 104 and 105 are transformed into band-limited ternary signals. The band-limited ternary signals are applied to the M-Z interferometer type optical intensity modulator 107 to modulate carriers output from the laser source 106, therefore optical duo-binary signals are generated. Here, bias of the M-Z interferometer type optical intensity modulator 107 is performed at a null point corresponding to a minimum value in a transfer characteristic function.

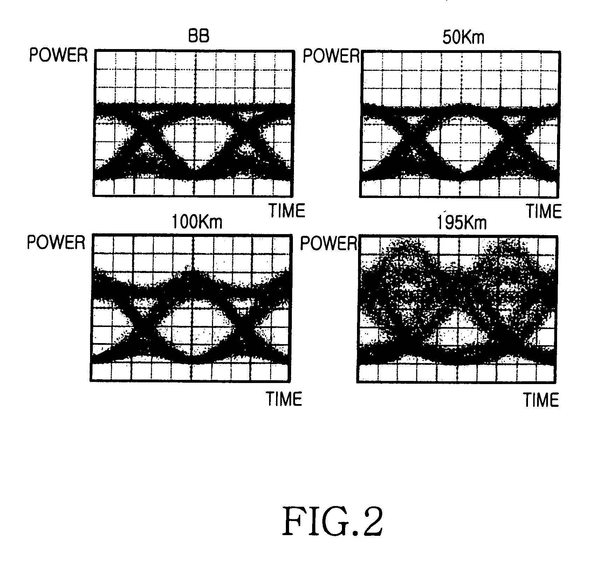

Fig. 2 includes eye diagrams according to transmission distances of the optical transmission apparatus 100 of Fig. 1, which are measured at the 2³¹-1 PRBS (Pseudo Random Binary Sequence). Here, the first eye diagram of Fig. 2, BB (back to back), shows a characteristic before signal transmission. As shown in Fig. 2, an optical duo-binary signal transmitted through a single mode optical fiber shows an enhanced transmission characteristic to a distance of 100km, but its transmission distance is restricted to approximately 200km, since crosstalk gradually increases at a distance over 100km such that signal quality is decreased. Therefore, substantially, the optical duo-binary signal cannot be used in a region between 200km and 250km, which is called a 'metro region.' Also, since the optical duo-binary signal in Fig. 1 is greatly dependent on characteristics of the electrical low bandpass filter, performance of the electrical low bandpass filter may be largely changed according to a pattern distance of the inputted binary signal. Especially, system penalties occur more frequently in a 2³¹⁻1 PRBS pattern with various patterns than in a 2⁷-1 PRBS pattern. Also, the conventional apparatus has disadvantages in that time jitters of signals occur more in the optical duo-binary signals than in general NRZ signals due to non-ideal characteristics of the electrical low bandpass filter.

It is the object of the present invention to provide an optical transmission apparatus using duo-binary modulation capable of increasing a transmission distance of duo-binary optical signals, such that the duo-binary optical signals can be used in a region 200km to 250km apart therefrom.

This object is solved by the subject matter of the independent claims. Preferred embodiments are defined in the dependent claims.

An aspect of the present invention relates to an optical transmission apparatus using duo-binary modulation capable of minimizing pattern dependence of duo-binary signals, which is caused when an electrical low bandpass filter is not used.

One embodiment of the present invention is directed to a duo-binary optical transmission apparatus including an electro-absorption modulated laser (EML) for performing a light intensity modulation operation based on an electrical data signal and producing a modulated optical signal. The EML has a light source for outputting carriers and a modulator for performing the light intensity modulation operation. The apparatus also includes a precoder for inputting an inverted signal of the electrical data signal and encoding it to an encoded signal, and a modulator for performing a phase modulation of the optical signal modulated by the EML and outputting a duo-binary optical signal, according to the encoded signal.

Another embodiment of the present invention is directed to a duo-binary optical transmission apparatus including an electro-absorption modulated laser (EML) for performing a light intensity modulation operation based on an electrical data signal and produce a modulated optical signal. The EML has a light source for outputting carriers and a modulator for performing the light intensity modulation operation. The apparatus also includes a first driving amplifier for amplifying the electrical data signal and driving the EML base on the amplified electrical data signal, a precoder for inputting an inverted signal of the electrical data signal and encoding it to an encoded signal, a second driving amplifier for amplifying the encoded signal and providing the amplified encoded signal to the modulator, a time delay for adjusting a delay time of the amplified encoded signal of the first driving amplifier of modulator and fitting it to the modulated optical signal of the EML, and a modulator for performing a phase modulation of the optical signal modulated by the EML and outputting a duo-binary optical signal, according to an output signal of the time delay.

A further embodiment of the present invention is directed to a duo-binary optical transmission method.

The above object and other aspects, embodiments and other advantages of the present invention will be more clearly understood from the following detailed description taken in conjunction with the accompanying drawings, in which:
Fig. 1 is a block diagram illustrating a conventional optical transmission apparatus using duo-binary modulation utilizing an electrical low bandpass filter;
Fig. 2 shows eye diagrams according to transmission distances of the conventional optical transmission apparatus of Fig. 1;
Fig. 3 is a block diagram illustrating an optical transmission apparatus using duo-binary modulation according to one embodiment of the present invention;
Fig. 4 is graphs illustrating chirp characteristics according to a bias voltage of an EML (Electro-absorption Modulated Laser) according to the present invention;
Fig. 5 is graphs illustrating transmission characteristics according to a bias voltage of an EML according to the present invention;
Fig. 6a is a block diagram illustrating a precoder used in an optical transmission apparatus using duo-binary modulation according to one embodiment of the present invention;
Figs. 6b is a block diagram illustrating a precoder used in an optical transmission apparatus using duo-binary modulation according to another embodiment of the present invention;
Fig. 7a is an eye-diagram after an NRZ data signal is modulated based on a light intensity modulation operation of an EML;
Fig. 7b is an eye-diagram after light intensity modulated signals modulated by an EML are modulated by a phase modulation operation in a Mach-Zehnder optical modulator;
Fig. 8 is an eye-diagram according to a transmission distance of the duo-binary optical transmission apparatus of Fig. 3; and
Fig. 9 is graphs illustrating characteristics of receive sensitivity according to a transmission distance of the duo-binary optical transmission apparatus, comparing the present invention with the prior art.

Now, embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention . Also, the terms used in the following description are terms defined taking into consideration the functions obtained in accordance with the embodiments of the present invention.

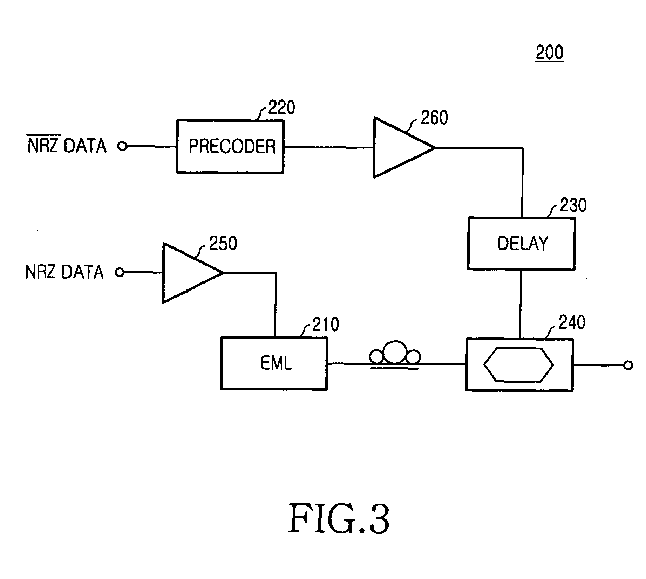

Fig. 3 is a block diagram illustrating an optical transmission apparatus 200 using duo-binary modulation according to one embodiment of the present invention.

With reference to Fig. 3, the optical transmission apparatus 200 includes an EML (Electro-absorption Modulated Laser) 210, a precoder 220, a time delay 230, and an optical modulator 240. The apparatus 200 can further include a first driving amplifier 250 for driving the EML 210, a second driving amplifier 260 for driving the optical modulator 240, and a polarizer 270.

The EML 210 modulates an input electrical data signal, i.e., an NRZ (non retum to zero) data signal, to an optical signal in a modulated format. The EML 210 is an element that can be manufactured by combining a laser diode (LD) with an electro-absorption (EA) modulator, which can be singly integrated on a substrate such that it can be mass-produced. Also, it should be understood by one of ordinary skill in the art that the EML 210 is relatively small-sized and cost-effective. If the level of input NRZ data signal is small, it is amplified by the first driving amplifier 250 such that the amplified and input NRZ data signal can drive the EML 210.

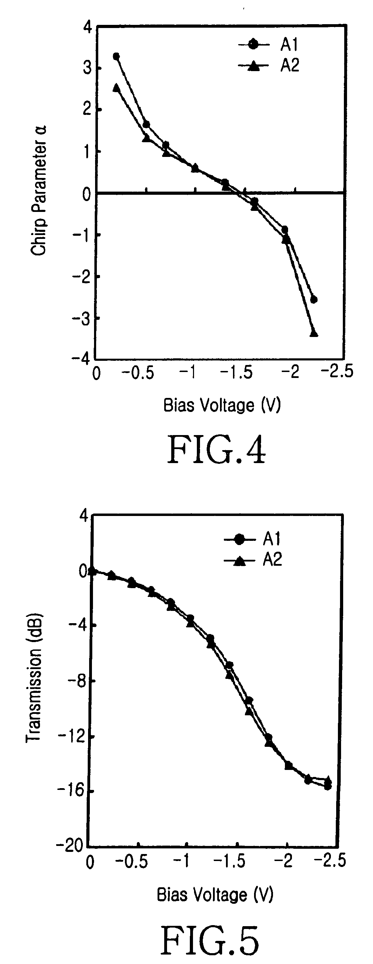

Figs. 4 and 5 are graphs illustrating characteristics of the electro-absorption (EA) modulator within the EML (for example, samples A1 and A2). An extinction ratio and driving voltage of sample A1 are 4.65dB, and OV to -1.15V, respectively. Also, an extinction ratio and driving voltage of sample A2 are 4.6dB, and OV to -1.07V, respectively.

Fig. 4 illustrates chirp characteristics according to a bias voltage of an EML according to one aspect of the present invention, in which the chirp characteristics are gradually changed from a positive region to a negative region as an inverse voltage supplied to the electro-absorption (EA) modulator is increased.

Fig. 5 illustrates transmission characteristics according to a bias voltage of an EML according to another aspect of the present invention, in which a loss of the electro-absorption (EA) modulator is increased and thusly an output signal is decreased, as an inverse voltage supplied to the electro-absorption (EA) modulator is increased.

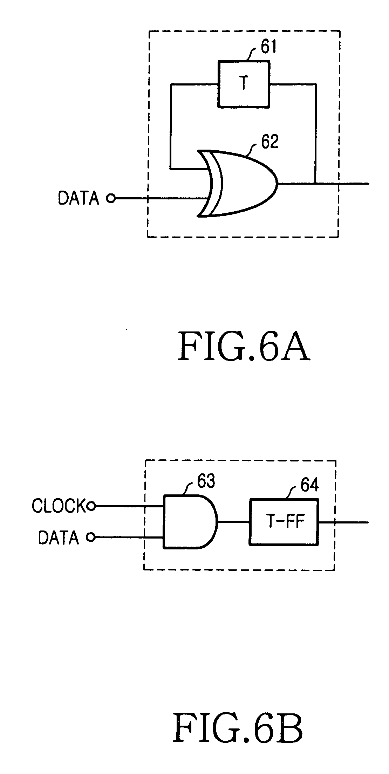

With reference to Fig. 3, the precoder 220 encodes an inverted signal of the inputted electrical data signal, i.e., a /NRZ (Non Return to Zero) data signal. The precoder 220 may be implemented as shown in the embodiments of Figs. 6a and 6b.

Figs. 6a and 6b are block diagrams illustrating precoders. Fig. 6a is a block diagram illustrating one embodiment of the present invention induding a one-bit time delay 61 and a logic exclusive OR gate (hereinafter referred to as XOR gate) 62. Fig. 6b is a block diagram illustrating another embodiment including a logic AND gate (hereinafter referred to as AND gate) 63 and a T flip-flop (called T-FF for short) 64. Even though the precoders shown in Figs. 6a and 6b are implemented to encode the /NRZ data signal, they may be implemented to further include an inverter before each of their input terminals so that they can encode NRZ data signal.

The second driving amplifier 260 amplifiers output signal of the precoder 220 to drive the optical modulator 240.

The time delay 230 adjusts delay time of output signal amplified by the second driving amplifier 260 and fits it to the optical signal modulated by the EML 210. Even though the time delay 230 is located between the second driving amplifier 260 and the optical modulator 240 in this embodiment of the present invention, the embodiment can be modified, for example, such that it may be located at an input lead of the precoder 220 or an input lead of the second driving amplifier 260.

The optical modulator 240 performs phase modulation of the optical signal modulated by the EML 210 based on an output signal of the time delay 230, and outputs duo-binary optical signal. The optical modulator 240 may be implemented with various types of Mach-Zehnder (M-Z) interferometer optical intensity modulators (hereinafter referred to M-Z optical modulator) such as an X-cut LiNbO₃ modulator, a Z-cut LiNbO₃ modulator, a polymer modulator, or an optical fiber type modulator. Generally, an M-Z optical modulator modulates the intensity of input light according to driving signal applied to its electrode, and, at the same time, performs phase modulation of the input light. To obtain the proper characteristics, the M-Z optical modulator should be employed.

The polarizer 270 adjusts polarization direction of the optical signals from the EML 210. This is done so that the polarization direction of the optical signals from the EML 210 is consistent with a specific polarization direction of the optical modulator 240, for example, a polarization direction with highest modulation efficiency.

Now, the operation of the optical transmission apparatus 200 will be described in detail below.

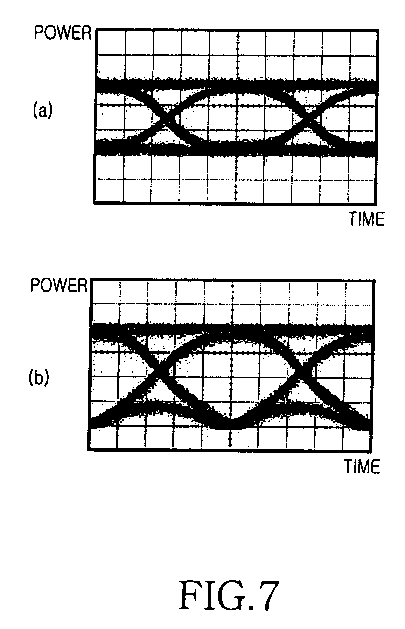

With reference to Fig. 3, an NRZ (Non Return to Zero) data signal is amplified by a first driving amplifier 250 such that the EML 210 performs a light intensity modulation operation based the amplified signal. A DC bias voltage and a driving voltage are adjusted such that the EML 210 is operated in a region with positive chirp characteristics and a relatively low extinction ratio. Fig. 7a is an eye-diagram after an NRZ data signal is modulated based on a light intensity modulation operation of an EML, which is implemented under conditions that a driving voltage for driving the EML V_{DRIVING} is 1.1 Vₚₚ, and a bias voltage V_{BIAS} is -0.55V. In this case, the extinction ratio is approximately 5dB.

A /NRZ data signal is encoded by the precoder 220 and then the encoded /NRZ data signal is amplified by the second driving amplifier 260. The amplified /NRZ data signal from the second driving amplifier 260 is delayed by the time delay 230 to apply it to the M-Z optical modulator in the optical modulator 240. The operating conditions of the M-Z optical modulator in the optical modulator 240 are a bias position and a magnitude of applying signal, so that the bias position is located at a null point corresponding to a minimum of modulator transfer characteristics and the magnitude of the applied signal is twice the half-wave voltage, V_{TT}, of the optical modulator. Also, a delay time of the time delay 230 is adjusted to perform a phase modulation at the center of a digit '0' of light intensity modulated signal. Under such operation conditions, the M-Z optical modulator in the optical modulator 240 operates as a phase modulator, and performs phase modulation of the optical intensity modulation signal in the EML 210.

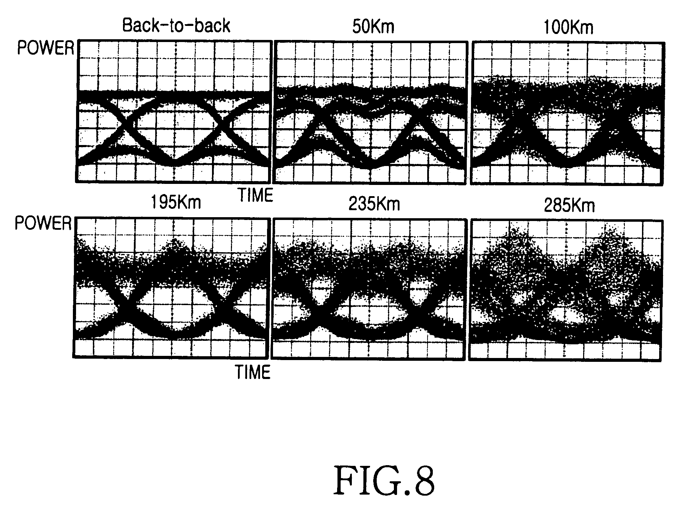

Fig. 7b is an eye-diagram after light intensity modulated signals modulated by an EML are modulated by a phase modulation operation in a Mach-Zehnder optical modulator. When a signal with a relatively small extinction ratio is phase-modulated at the center of a digit `0', since an offset interference occurs at the center of a digit '0', an eye-diagram with respect to the signal can be obtained like that of a general duo-binary optical signal. Since phase-modulation is performed by the M-Z optical modulator, a phase transition occurs at the center of a digit '0', which causes offset interference. If a general phase modulator is used, since a phase transition does not occur at the center of a digit '0', offset interference is not generated. Especially, since the input data signal does not pass through the electrical low band pass filter, time jitters also can be reduced to those of the NRZ data signal and dependence with respect to a pattern can be reduced by a relatively large ratio. One advantages of this embodiment of the present invention can be seen by comparing the BB (Back-to-Back) eye-diagram of Fig. 8 with the eye-diagrams of the prior art of Fig. 2.

Fig. 8 is an eye-diagram according to a transmission distance of the duo-binary optical transmission apparatus of Fig. 3, in which the eye-diagram is obtained at a 2³¹-1 PRBS distance. As shown in the drawing, pulses are spread out to a distance of 50km due to a positive chirp, but the pulses show effects to be recompressed between 50km and 200km due to phase modulation generated at the center of zero level (a digit 0). After that, even though the pulse signal gradually increases crosstalk over a distance of 200km, the pulses can be transmitted to a distance of 285km.

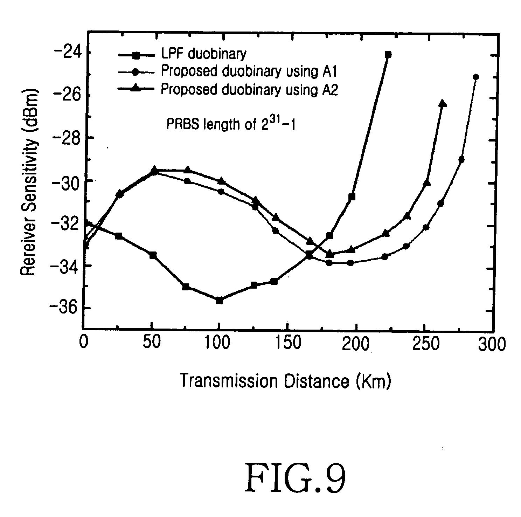

Fig. 9 illustrates characteristics of receive sensitivity according to a transmission distance of the duo-binary optical transmission apparatus, compared to the prior art discussed above. Reference numerals 91 and 92 are graphs showing characteristics of the EMLs of samples A1 and A2 as in Figs. 4 and 5, respectively, and reference numeral 93 shows a graph using a conventional optical transmission apparatus using duo-binary modulation. Regarding back-to-back (BB) characteristics, the optical transmission apparatus using duo-binary modulation is superior to the conventional optical transmission apparatus by approximately 1dB, and also can transmit a data signal to a distance of 50km to 75km farther than that of the prior art. The optical fiber for transmission is operated in a standard single mode with a distribution of 17ps/nm/km at 1550nm, which are measured in a 2³¹-1 PRBS distance.

As mentioned above, the optical transmission apparatus 200 modulates intensity of electrical data signals in a region having a positive chirp and a relatively low extinction ratio using an EML, which can be integrated in a single chip, and phase-modulates using an optical modulator such that an input data signal can be transmitted to a region of 250km. Therefore, when utilizing aspects of the present invention, a duo-binary modulation technology can cover a "metro region" around 250km.

Also, since embodiments of the present invention do not use an electrical low bandpass filter, pattern dependence and time jitters can be largely reduced such that signal quality is maintained in good conditions.

Although embodiments of the present invention have been disclosed for illustrative purposes, those skilled in the art will appreciate that various modifications, additions and substitutions are possible, without departing from the scope of the invention as disclosed in the accompanying claims.

## Claims

1. A duo-binary optical transmission apparatus, comprising:
an electro-absorption modulated laser arranged to perform a light intensity modulation operation based on an electrical data signal and to produce a modulated optical signal, the electro-absorption modulated laser having a light source for outputting carriers and a modulator for performing the light intensity modulation operation;
a precoder arranged to input an inverted signal of the electrical data signal and encode the inverted signal to an encoded signal; and
a modulator arranged to perform a phase modulation of the optical signal modulated by the electro-absorption modulated laser and output a duo-binary optical signal, according to the encoded signal.

2. The apparatus as set forth in claim 1, further comprising a time delay for adjusting delay time of the encoding signal encoded by the precoder and fitting it to the modulated optical signal modulated by the electro-absorption modulated laser.

3. The apparatus as set forth in claim 2, wherein the time delay adjusts the delay time to perform a phase modulation at a center of a digit '0' of the modulated optical signal.

4. The apparatus as set forth in one of claims 1 to 3, further comprising a first driving amplifier for amplifying the electrical data signal and driving the electro-absorption modulated laser based on the amplified electrical data signal.

5. The apparatus as set forth in claim 4, further comprising a second driving amplifier for amplifying the encoded signal and providing the amplified encoded signal to the modulator.

6. The apparatus as set forth in one of claims 1 to 5, wherein the electrical data signal is a non return to zero signal.

7. The apparatus as set forth in one of claims 1 to 6, wherein the duo-binary optical signal has transmission characteristics that can be adjusted by controlling chirp characteristics and extinction ratio of the electro-absorption modulated laser.

8. The apparatus as set forth in claim 7, wherein the chirp characteristics and the extinction ratio of the electro-absorption modulated laser that can be adjusted by controlling a DC bias voltage and driving voltage of the electro-absorption modulated laser.

9. The apparatus as set forth in one of claims 1 to 8, wherein the modulator is a Mach-Zender optical modulator.

10. The apparatus as set forth in claim 9, wherein the Mach-Zender optical modulator includes one of a X-cut LiNbO₃ modulator, a Z-cut LiNbO₃ modulator, a polymer modulator or an optical fiber typed modulator.

11. The apparatus as set forth in claim 9, wherein the modulator is biased at a null point corresponding to a minimum of a transfer function.

12. The apparatus as set forth in claim 4, wherein the time delay is located between the precoder and the second driving amplifier for driving the modulator.

13. The apparatus as set forth in claim 5, wherein the time delay is located between the second driving amplifier and the modulator.

14. The apparatus as set forth in one of claims 1 to 13, wherein the precoder indudes a one-bit time delay and an exdusive-OR gate.

15. The apparatus as set forth in one of claims 1 to 13, wherein the precoder indudes an AND gate and a T-flipflop.

16. The apparatus as set forth in claim 1, further comprising:
a first driving amplifier arranged to amplify the electrical data signal and drive the electro-absorption modulated laser base on the amplified electrical data signal;
a second driving amplifier arranged to amplify the encoded signal and providing the amplified encoded signal to the modulator;
a time delay arranged to adjust a delay time of the amplified encoded signal of the first driving amplifier of modulator and fit it to the modulated optical signal of the electro-absorption modulated laser,
wherein said modulator is further arranged to perform said phase modulation and to output said duo-binary optical signal according to an output signal of the time delay.

17. The apparatus as set forth in claim 16, wherein the time delay adjusts the delay time to perform a phase modulation at a center of digit '0' bit of the modulated optical signal.

18. A duo-binary optical transmission method, wherein the method comprises the steps of:
arranging an electro-absorption modulated laser to perform a light intensity modulation operation based on an electrical data signal and to produce a modulated optical signal,
outputting carriers by the electro-absorption modulated laser having a light source, and performing the light intensity modulation operation by a modulator;
inputting an inverted signal of the electrical data signal and encoding the inverted signal to an encoded signal by a precoder; and
performing, by a modulator, a phase modulation of the optical signal modulated by the electro-absorption modulated laser and an output of a duo-binary optical signal, according to the encoded signal.

19. The method as set forth in claim 18 adapted to operate the duo-binary optical transmission apparatus of one of claims 1 to 17.
